(19) **Europäisches Patentamt**

**European Patent Office**

**Office européen des brevets**

(11) **EP 0 756 926 A1**

(12) # DEMANDE DE BREVET EUROPEEN

(43) Date de publication:
**05.02.1997 Bulletin 1997/06**

(51) Int. Cl.⁶: **B29C 45/56**
// B29K23:00, B29K105:14

(21) Numéro de dépôt: **96202121.8**

(22) Date de dépôt: **25.07.1996**

(84) Etats contractants désignés:
**BE DE FR GB IT**

(30) Priorité: **01.08.1995 BE 9500664**

(71) Demandeur: **SOLVAY (Société Anonyme)**
**B-1050 Bruxelles (BE)**

(72) Inventeurs:
• **Dehennau, Claude**
**1410 Waterloo (BE)**

• **Leo, Vito**
**1315 Glimes, Incourt (BE)**
• **Cuvelliez, Charles**
**1640 Rhode-Saint-Genese (BE)**

(74) Mandataire: **Dambois, Denis Camille Daniel et al**
**Solvay S.A.**
**DCR-PI**
**310, rue de Ransbeek**
**1120 Bruxelles (BE)**

(54) **Procédé de moulage d'une matière thermoplastique par injection sur noyau tournant**

(57)     Procédé de moulage par injection sur noyau tournant d'une matière thermoplastique présentant un module de relaxation en cisaillement $G_n(7,5)$ supérieur à 0,15. Ce procédé, qui donne de bons résultats avec les polyoléfines, permet de fabriquer des articles tels que récipients et cylindres présentant de bonnes propriétés mécaniques.

EP 0 756 926 A1

**Description**

La présente invention concerne un procédé de moulage d'une matière thermoplastique par injection sur noyau tournant. La technique du moulage par injection sur noyau tournant, décrite notamment dans le brevet US 3 907 952, permet de fabriquer des articles présentant une symétrie de révolution et une bonne résistance mécanique. Elle consiste à injecter une matière thermoplastique en fusion dans un moule dont une partie - généralement une partie centrale que l'on qualifie de noyau - est rotative par rapport à l'autre, et est classiquement maintenue en rotation durant l'introduction de la matière thermoplastique dans le moule. Cette technique oriente fortement la matière thermoplastique dans le sens circonférentiel, ce qui permet de compenser l'orientation majoritairement axiale induite par l'injection dans le cas d'un remplissage à partir d'une extrémité du moule, ainsi que "d'effacer" les éventuelles lignes de soudure dans le cas d'un remplissage latéral du moule. On peut ainsi obtenir des articles injectés tels que des récipients, cylindres, manchons, etc. dont la résistance mécanique est supérieure à celle des articles injectés au moyen d'une technique classique de moulage par injection, c'est-à-dire dans un moule dont toutes les parties sont immobiles les unes par rapport aux autres.

Cependant, les procédés connus de moulage par injection sur noyau tournant ne permettent pas de fabriquer des articles épais de plusieurs millimètres présentant des propriétés mécaniques satisfaisantes ; en particulier, leur résistance à la pression est quasiment identique à celle qu'ils auraient présentée s'ils avaient été injectés sans que le noyau ne fût mis en rotation.

Les matières thermoplastiques utilisées jusqu'ici pour le moulage par injection, et en particulier pour le moulage par injection sur noyau tournant, présentent une faible viscosité. On considérait généralement que les matières thermoplastiques fortement visqueuses ne sont pas adaptées à l'injection, et que leur utilisation conduit à de nombreux inconvénients ; en particulier, elle nécessite un appareillage résistant à des pressions élevées, augmente la durée des cycles d'injection, et provoque la formation de champs de contraintes intempestifs pouvant nuire à la résistance mécanique des articles injectés.

On a maintenant trouvé que la résistance mécanique d'articles fabriqués par moulage par injection sur noyau tournant d'une matière thermoplastique, et notamment d'articles épais, pouvait être considérablement améliorée par un choix judicieux de la matière thermoplastique utilisée.

De manière plus précise, la présente invention vise à fournir un procédé amélioré de moulage d'une matière thermoplastique par injection sur noyau tournant, caractérisé en ce que la matière thermoplastique présente un module de relaxation en cisaillement $G_n(7,5)$ supérieur à 0,15.

$G_n(7,5)$ désigne la valeur normalisée du module de relaxation en cisaillement de la matière thermoplastique, $\dot{G}(t)$ (comme décrit par H. M. Laun dans Rheologica Acta, vol. 17, n° 1 (jan./fév. 1978), pp. 1-15, en particulier dans l'équation [8]), à 7,5 secondes et à une température supérieure de 30 °C à la température de fusion de la matière thermoplastique considérée ($T_f$ telle que mesurée par DSC (calorimétrie différentielle à balayage) à une vitesse de 10 K par minute). Plus précisément, sur base de mesures des modules élastique et visqueux en fonction de la fréquence d'excitation (de 0,01 à 100 $s^{-1}$), on déduit le modèle de Maxwell généralisé qui s'en rapproche le plus. Ce modèle permet alors de tracer une courbe représentant l'évolution en fonction du temps du module de relaxation en cisaillement, qu'on normalise de telle sorte que $G_n(t) = 100$ pour $t = 0$. Autrement dit, $G_n(t) = 100 \times \dot{G}(t) / \dot{G}(0)$. La valeur de $G_n(t)$ pour $t = 7,5$ s est alors relevée sur cette courbe. La demanderesse a constaté que parmi toutes les valeurs de t auxquelles on peut évaluer le module de relaxation en cisaillement $G_n(t)$, c'est pour $t = 7,5$ s qu'il est possible de définir le critère le plus fiable et le plus uniforme permettant de caractériser les matières thermoplastiques donnant les meilleurs résultats lors de leur injection sur noyau tournant.

Ce module de relaxation en cisaillement est de préférence supérieur à 0,2, de manière particulièrement préférée supérieur à 0,3, et idéalement supérieur à 0,5. Par ailleurs, on préfère que la valeur de $G_n(7,5)$ soit inférieure à 10, et tout particulièrement inférieure à 5.

En outre, la matière thermoplastique utilisée présente de préférence les propriétés généralement requises en vue d'une injection, par exemple une bonne démoulabilité, une borne tenue aux cisaillements élevés, une bonne stabilité thermique, etc.

La matière thermoplastique en question comprend au moins un polymère thermoplastique. De préférence, la matière thermoplastique est essentiellement constituée d'au moins un polymère thermoplastique. Tout polymère thermoplastique peut être utilisé, notamment les polymères du chlorure de vinyle, les polyamides et les polyoléfines. De bons résultats ont été obtenus lorsque la matière thermoplastique comprend au moins une polyoléfine. Parmi les polyoléfines, on préfère utiliser des polymères de mono-oléfines, tels que les polymères de l'éthylène et/ou du propylène (y compris leurs copolymères comprenant en outre un ou plusieurs autres monomères).

De bons résultats ont été obtenus lorsque la matière thermoplastique comprend au moins un polymère thermoplastique semi-cristallin. De préférence, au moins 50 % en masse de la matière thermoplastique est constituée d'un ou plusieurs polymères thermoplastiques semi-cristallins. De manière particulièrement préférée, la matière thermoplastique est essentiellement constituée d'un ou plusieurs polymères thermoplastiques semi-cristallins. Par polymères thermoplastiques semi-cristallins, on entend désigner des polymères thermoplastiques qui ne soient pas amorphes. Des exemples de polymères thermoplastiques semi-cristallins sont les polyamides (en particulier aromatiques), le polysulfure de phénylène, le polyéthylène et le polypropylène.

Par ailleurs, il est avantageux d'utiliser des polymères thermoplastiques à cristallisation rapide, tels que par exemple le polyéthylène (PE). En cas de besoin, un agent nucléant peut être ajouté à un polymère thermoplastique qui, en tant que tel, ne présenterait pas une cristallisation rapide.

Outre au moins un polymère thermoplastique, la matière thermoplastique injectée peut éventuellement comprendre au moins une charge.

Toute charge connue peut être utilisée. Des exemples de charges utilisables, donnés à titre non limitatif, sont le talc, le carbonate de calcium et le mica. On préfère utiliser des charges anisotropes, par exemple en forme de paillettes ou de fibres. L'utilisation de fibres est avantageuse sur le plan des propriétés mécaniques. A titre d'exemples de fibres, on peut citer les fibres de verre et de carbone, ainsi que des fibres polymériques telles que d'aramide. On préfère utiliser une charge comprenant des fibres de verre. L'amélioration des résultats est surtout remarquable lorsque la teneur de la ou des charges dépasse 10 %, et en particulier dépasse 20 %, par rapport au poids total de la matière thermoplastique et de(s) charge(s).

Enfin, la matière thermoplastique peut encore éventuellement contenir un ou plusieurs additifs conventionnels tels que pigments, anti-oxydants, stabilisants, ignifugeants, etc.

Comme indiqué précédemment, l'injection sur noyau tournant consiste à injecter une matière thermoplastique fondue dans un moule comprenant au moins deux parties rotatives l'une par rapport à l'autre, définissant un volume fermé.

Généralement, le moule comprend un élément central (noyau) disposé à l'intérieur d'un élément creux (matrice). Habituellement, le noyau est symétrique de révolution, par exemple cylindrique ou conique, la matrice pouvant être symétrique de révolution ou quasi-symétrique de révolution, c'est-à-dire qu'elle peut éventuellement comporter une ou plusieurs parties non symétriques de révolution, telles que par exemple une nervure ou un bossage s'étendant axialement ou hélicoïdalement, en creux ou en relief, sur au moins une partie de sa longueur. Il est ainsi possible de fabriquer, par exemple, un "cylindre" dont l'évidement central aurait une section circulaire et la surface extérieure une section octogonale. Il est fortement recommandé que les axes de symétrie ou de quasi-symétrie du noyau et de la matrice soient au moins approximativement confondus, et/ou au moins approximativement parallèles. De préférence, leurs axes sont exactement confondus. Il est commode que le noyau soit rotatif par rapport à la matrice fixe. Rien n'empêche cependant que le noyau soit fixe et la matrice rotative, ou encore que tous deux soient rotatifs à des vitesses différentes.

Selon une variante particulière, le noyau ne présente pas une symétrie de révolution ; à titre d'exemple, on pourrait utiliser un noyau dont la section transversale serait polygonale sur au moins une partie de sa longueur.

La rotation relative des différentes parties du moule peut commencer pendant la phase d'injection de la matière thermoplastique dans le moule, encore appelée phase de remplissage. On peut également la faire commencer pendant la phase de maintien, qui débute lorsque le moule est entièrement rempli de matière thermoplastique et se termine lorsqu'on cesse de maintenir celle-ci sous pression. La rotation relative des différentes parties du moule se poursuit avantageusement pendant au moins une partie de la phase de maintien, et éventuellement au-delà de celle-ci, par exemple pendant un temps prédéterminé, ou jusqu'à ce que la matière thermoplastique ait atteint un certain seuil de viscosité suite à son refroidissement (ce qui peut par exemple se constater en mesurant en continu le couple ou la puissance délivrés par le moteur assurant cette rotation). Généralement, dans le cas d'articles dont l'épaisseur est de l'ordre de 1 à 5 mm, la durée de la rotation est d'environ 10 à 120 s, de préférence de 30 à 80 s. Cette durée est liée à la nature de la matière thermoplastique, et en particulier à son temps de solidification, qui croît approximativement comme le carré de l'épaisseur de l'article.

Il est avantageux que la rotation soit interrompue avant la fin de la phase de maintien. De manière préférée, la durée de la rotation est d'au moins 10 % de la durée de la phase de maintien. Avantageusement, elle est par ailleurs d'au plus 90 % de cette durée.

La vitesse de rotation relative des différentes parties du moule est en général telle que le taux de cisaillement moyen auquel la matière thermoplastique est soumise soit d'au moins 25 $s^{-1}$, de préférence supérieur à 30 $s^{-1}$. Elle est par ailleurs généralement telle que ce taux soit d'au plus 80 $s^{-1}$, de préférence inférieur à 70 $s^{-1}$. Le taux de cisaillement moyen en question (en $s^{-1}$) peut être considéré comme valant $2 \pi N r_n /e$, où N désigne la vitesse de rotation angulaire du noyau par rapport au moule (en tours par s), $r_n$ le diamètre de ce noyau, et e l'épaisseur moyenne de la paroi de l'article.

Le procédé de moulage par injection sur noyau tournant de l'invention permet de fabriquer de nombreux types d'articles au moins approximativement symétriques de révolution, tels que récipients, cylindres, manchons, etc., présentant d'excellentes propriétés mécaniques. Ces articles peuvent toutefois éventuellement comporter une ou plusieurs parties non symétriques de révolution, en creux ou en relief, telles que nervures, bossages, cannelures, etc.

On a constaté que le procédé de moulage par injection sur noyau tournant défini ci-dessus est très avantageux lorsqu'il est appliqué à la fabrication d'articles dont au moins une partie a une épaisseur d'au moins 2 mm, et plus particulièrement d'au moins 3 mm, contrairement aux procédés connus qui ne conduisent dans de tels cas qu'à une augmentation insignifiante de la résistance à la pression.

Comme exposé précédemment, en raison de leur viscosité considérable, les matières thermoplastiques définies ci-dessus par leur module de relaxation en cisaillement n'étaient jamais moulées par injection (classique ou sur noyau tournant). De manière surprenante, malgré les inconvénients que l'on associe généralement à cette viscosité, l'utilisation de telles matières thermoplastiques est néanmoins extrêmement avantageuse dans le cadre de la présente invention, et permet de fabriquer des pièces présentant des propriétés mécaniques remarquables.

Exemples

Les exemples suivants illustrent, de façon non limitative, les avantages de l'invention.

Des cylindres de 25 mm de diamètre intérieur, de 32 mm de diamètre extérieur et de 150 mm de long ont été injectés sur une presse d'injection de type Engel 250 T, munie d'une vis de 55 mm de diamètre. Les conditions de l'injection étaient :

| | |
|---|---|
| vitesse d'injection : | 20 mm/s |
| pression de maintien (hydraulique) : | 40 bars |
| durée de la phase de remplissage : | 4 s |
| durée de la phase de maintien : | 30 s |
| température de la matière : | 260 °C |

La matière thermoplastique était injectée à partir d'une extrémité du moule.

Le noyau constituant la partie mâle du moule était entraîné par un moteur hydraulique Mannesman Rexroth de type MZA 210A (couple max. 500 Nm à 200 t/min ; vitesse max. 350 t/min.), alimenté par un groupe hydraulique Vickers. Lorsqu'il fonctionnait, le moteur était réglé de manière à imposer à la matière thermoplastique un taux de cisaillement moyen de 23 s$^{-1}$, et ce durant 45 s. La période de rotation du noyau commençait au début de la phase de remplissage, et se poursuivait donc 11 s après la fin de la phase de maintien.

Les cylindres ainsi réalisés sont évalués après avoir été ramenés par sciage à une longueur de 100 mm, et ce au moyen d'un test de mesure de la pression instantanée d'éclatement ou d'une mesure de la durée de résistance à l'éclatement sous une pression constante.

Pour la résistance à la pression instantanée d'éclatement, le test s'effectue à la température ambiante, à l'aide d'une pompe manuelle qui permet une mise en pression à une vitesse de 20 bars par seconde. Le cylindre est fermé à ses deux extrémités par des embouts métalliques. En vue de ne mesurer que l'effet de l'orientation circonférentielle générée par la rotation du noyau, on supprime toute sollicitation axiale du cylindre en reliant les deux embouts par une barre d'acier, qui empêche toute déformation longitudinale. Le cylindre est immergé dans un bac rempli d'eau pour éviter tout risque d'explosion. Avant immersion, le cylindre est rempli d'eau pour éviter la formation de poches d'air. On fait croître la pression et on relève à quelle pression le cylindre éclate.

Pour la mesure du temps de résistance à l'éclatement, le cylindre est soumis à une pression constante, sans barre de reprise des sollicitations axiales, et on relève le temps au bout duquel le cylindre éclate. Les embouts n'étant alors plus reliés par la barre d'acier, on mesure ainsi également l'influence des sollicitations axiales, ce qui correspond à une utilisation plus réaliste.

Les propriétés rhéologiques sont évaluées au moyen d'un rhéogoniomètre RHEOMETRICS® R.D.S., dont les plateaux décrivent un mouvement oscillant de faible amplitude (1 à 10 % en déformation (strain) par rapport à l'épaisseur de l'échantillon). Le principe et l'interprétation de la mesure sont notamment détaillés dans l'article de H.M. Laun déjà cité.

Exemples comparatifs 1R à 4R

A titre de comparaison, on a injecté des cylindres de manière classique (sans rotation du noyau), à partir de différents types de polyéthylène de haute densité (HDPE) de marque ELTEX® (SOLVAY), de types respectifs A3180 (ex. 1R), A1050 (ex. 2R), B3002 (ex. 3R) et B5290 (ex. 4R). Les pressions instantanées d'éclatement mesurées étaient chaque fois de 70 bars.

Exemples comparatifs 5R et 6R

On a injecté les mêmes matières thermoplastiques que dans les exemples 1R et 2R respectivement, mais en mettant cette fois le noyau en rotation, et ce dès le début du remplissage, pendant 45 s, de manière à soumettre la matière thermoplastique à un taux de cisaillement de 23 s$^{-1}$. Les résultats sont indiqués dans le tableau 1.

Exemples 7 et 8

On a injecté les mêmes matières thermoplastiques que dans les exemples 3R et 4R respectivement, en mettant également le noyau en rotation, et ce dans les mêmes conditions que dans les exemples 5R et 6R. Les résultats de ces deux essais conformes à l'invention sont indiqués dans le tableau 1.

Exemples comparatifs 9R et 10R

Un polypropylène de marque ELTEX P HW206 a été injecté dans les mêmes conditions, respectivement sans (ex. 9R) et avec (ex. 10R) rotation du noyau (dans les mêmes conditions que ci-dessus). Les résultats figurent à la dernière ligne du tableau 1.

Tableau 1

| Matière thermoplastique | $G_n(7,5)$ | Pression instantanée d'éclatement (bars) | |
|---|---|---|---|
| | | sans rotation du noyau (ex. 1R-4R et 9R) | avec rotation du noyau (ex. 5R-8 et 10R) |
| PE A3180 | $1,13 . 10^{-4}$ | 70 (1R) | 105 (5R) |
| PE A1050 | $30,7 . 10^{-4}$ | 70 (2R) | 150 (6R) |
| PE B3002 | $28,1 . 10^{-2}$ | 70 (3R) | 180 (7) |
| PE B5920 | $1,21$ | 70 (4R) | 210 (8) |
| PP HW206 | $6,24 . 10^{-4}$ | 95 (9R) | 105 (10R) |

Exemples comparatifs 11R et 12R

On a mesuré la durée de résistance à l'éclatement des cylindres obtenus selon les exemples 2R et 6R respectivement, sous diverses pressions (ex. 11R : 50, 40, 30 et 25 bars ; ex. 12R : 120, 100, 80, 70, 60, 50, 45 et 40 bars). Lorsqu'on les porte sur un graphique bi-logarithmique (pression / durée de résistance à l'éclatement), les résultats de ces mesures se situent approximativement sur une droite, et on peut donc facilement estimer la pression à laquelle ces cylindres peuvent résister pendant un temps donné, par exemple 100 minutes (par interpolation) et 10 ans (par extrapolation). Ces résultats figurent dans le tableau 2.

On constate que la rupture se fait approximativement parallèlement à l'axe du cylindre (axialement), aussi bien pour le cylindre 11R que 12R. Ceci traduit une résistance circonférentielle (tangentielle) plus faible que la résistance axiale (à long terme). Si on compare les exemples 11R (injection sans rotation) et 12R (injection avec rotation), on constate que l'utilisation d'une matière thermoplastique non conforme à l'invention ne permet à la technique d'injection sur noyau tournant que de conduire à une légère amélioration de la résistance à la pression à court terme.

Exemples 13R (comparatif) et 14

On a évalué de la même façon la durée de résistance à l'éclatement des cylindres obtenus selon les exemples 4R et 8, sous des pressions de 60, 50, 40, 35 et 30 bars pour l'exemple 13R, et sous 100, 90, 80, 75 et 60 bars pour l'exemple 14. On a également reporté dans le tableau 2 la pression de rupture interpolée à 100 minutes et extrapolée à 10 ans.

Contrairement aux exemples 11R et 12R, le cylindre obtenu par injection sur noyau tournant conformément à l'invention (ex. 14) présente une pression d'éclatement extrapolée à 10 ans nettement supérieure à celle de l'ex. 13R (sans rotation). En outre, pour l'ex. 14, la rupture se fait approximativement perpendiculairement à l'axe du cylindre, ce qui signifie que sous l'effet de la rotation du noyau, la résistance circonférentielle (tangentielle) dépasse la résistance axiale.

Ces résultats montrent que lorsque la résine possède un module $G_n(7,5)$ élevé, l'orientation circonférentielle induite par la rotation du noyau permet de compenser l'orientation axiale "naturelle" induite par l'injection, et d'ainsi obtenir des articles dont la résistance mécanique est plus isotrope.

Si on compare les exemples 13R (injection sans rotation) et 14 (injection avec rotation), on constate que l'utilisation d'une matière thermoplastique conforme à l'invention permet à la technique d'injection sur noyau tournant de conduire à une forte amélioration de la résistance à la pression, et ce aussi bien à court terme qu'à long terme.

On constate par ailleurs, en observant les résultats des exemples 12R et 14, que l'injection sur noyau tournant d'une matière thermoplastique conforme à l'invention permet de fabriquer des articles présentant une résistance à la pression qui est à la fois plus élevée et plus stable dans le temps que si on utilise une matière thermoplastique non conforme à l'invention.

Tableau 2

| Exemples | Rotation du noyau | Pression d'éclatement (bars) | |
|---|---|---|---|
| | | interpolée à 100 minutes | extrapolée à 10 ans |
| 11R | non | 40 | 5 |
| 12R | oui | 60 | 5 |
| 13R | non | 40 | 15 |
| 14 | oui | 90 | 35 |

**Revendications**

1. Procédé de moulage d'une matière thermoplastique par injection sur noyau tournant, caractérisé en ce que la matière thermoplastique présente un module de relaxation en cisaillement $G_n(7,5)$ supérieur à 0,15.

2. Procédé selon la revendication 1, dans lequel la matière thermoplastique présente un module de relaxation en cisaillement $G_n(7,5)$ supérieur à 0,3.

3. Procédé selon l'une des revendications précédentes, dans lequel la matière thermoplastique comprend au moins une polyoléfine.

4. Procédé selon l'une des revendications précédentes, dans lequel la matière thermoplastique comprend au moins un polymère thermoplastique semi-cristallin.

5. Procédé selon l'une des revendications précédentes, dans lequel la matière thermoplastique comprend au moins une charge.

6. Procédé selon la revendication 5, dans lequel la charge comprend des fibres de verre.

7. Procédé selon l'une des revendications précédentes, appliqué à la fabrication d'articles dont au moins une partie a une épaisseur d'au moins 2 mm.

**Office européen des brevets** **RAPPORT DE RECHERCHE EUROPEENNE**

Numero de la demande

EP 96 20 2121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X | US-A-3 907 952 (KENNETH J. CLEEREMAN) * colonne 16, ligne 26 - ligne 62; revendications 1,4,7 * --- | 1-7 | B29C45/56 //B29K23:00, B29K105:14 |
| X | GB-A-1 156 946 (THE DOW CHEMICAL COMPANY) * page 5, ligne 95 - ligne 121; revendications 1,2,5-8,10 * --- | 1-7 | |
| X | US-A-4 783 301 (KUO Z. HONG) * colonne 13, ligne 28 - ligne 47; revendications 1-6; figures 8,11,25 * --- | 1-5,7 | |
| D,A | RHEOLOGICA ACTA, vol. 17, no. 1, Février 1978, DARMSTADT, pages 1-15, XP000567550 H.M. LAUN: "Description of the non-linear shear behaviour of a low density polyethylene melt by means of an experimentally determined strain dependent memory function" * page 4, colonne de gauche, alinéa 2 * ----- | 1 | |

DOMAINES TECHNIQUES RECHERCHES (Int.Cl.6)

B29C

Le présent rapport a été établi pour toutes les revendications

| Lieu de la recherche | Date d'achèvement de la recherche | Examinateur |
|---|---|---|
| LA HAYE | 5 Novembre 1996 | Van Nieuwenhuize, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)